# FASCICULE DE BREVET EUROPEEN

(11) **EP 1 947 394 B1**
(45) Date de publication et mention de la délivrance du brevet: **24.02.2010**
(21) Numéro de dépôt: 07100705.8
(22) Date de dépôt: 17.01.2007
(51) Int. Cl.: F24D 3/08, F24D 19/10

(54) **Installation de chauffage domestique et/ou de production d'eau chaude sanitaire**
Anlage zur Wohnungsheizung und/oder zur Warmwassererzeugung im Sanitärbereich
Installation for domestic heating and/or for producing domestic hot water

(43) Date de publication de la demande: 23.07.2008
(73) Titulaire: Société Muller & Cie, 75018 Paris (FR)
(72) Inventeur: Chavy, M. Ogier, 80210 Feuquières en Vimeu (FR); Fort, Emilien, 80210 Feuquières en Vimeu (FR)
(74) Mandataire: Schmit, Christian Norbert Marie

(56) Documents cités:
- EP-A- 0 180 417
- AT-B- 400 629
- DE-A1- 2 821 793
- DE-A1- 10 010 752
- DE-A1- 10 349 942
- DE-A1- 19 747 592
- DE-A1- 19 747 593
- DE-A1- 19 830 867
- US-A- 4 995 376
- US-A- 6 161 506

## Description

La présente invention a trait à une installation de chauffage dont le but est de pourvoir au chauffage domestique et/ou en eau chaude sanitaire dans un logement ou un local.

De façon classique et connue, le chauffage est assuré par la circulation d'un fluide en l'occurrence de l'eau à l'intérieur de tubes ou de canalisations formant différents réseaux. L'eau de chauffage est chauffée par une chaudière.

La production d'eau chaude sanitaire peut être assurée, quant à elle, par un circuit d'eau chaude indépendant, également chauffé par la chaudière, via un échangeur au sein d'un ballon de production d'eau chaude.

Néanmoins un ballon de production d'eau chaude sanitaire peut être alimenté par une énergie autre que celle d'une chaudière. Le ballon peut être dissocié du circuit de chauffage, notamment il peut être chauffé à l'électricité (ballon électrique).

Une chaudière quant à elle, indépendamment de la technologie employée, est alimentée traditionnellement par des énergies telles que le fioul, le gaz et également l'électricité.

Or depuis quelques années il est apparu, eu égard au coût des énergies telles que le fuel, le gaz et l'électricité, mais aussi eu égard aux émissions polluantes pouvant avoir trait à l'emploi de ces énergies, un intérêt grandissant pour les énergies dites nouvelles ou non polluantes, renouvelables et gratuites.

Ces nouvelles énergies sont notamment les énergies de type éolienne, géothermique, solaire, biomasse et/ou pile à combustible. Ce sont ces dernières qui nous intéresseront dans la présente invention.

Ces énergies renouvelables et non polluantes sont suffisantes sous certaines latitudes afin d'assurer le chauffage et la production d'eau chaude sanitaire, toute l'année, dans un lieu. Bien souvent, sous d'autres latitudes, elles sont encore employées en association avec une chaudière à énergie traditionnelle afin de pouvoir fonctionner en demi-saison, mais aussi en saison froide (hiver) grâce à l'énergie d'appoint de la chaudière.

Ces énergies renouvelables suffisent par contre à produire aisément de l'eau chaude sanitaire durant toute l'année.

Il existe également comme énergie nouvelle la technologie des pompes à chaleur faisant appel à des échanges eau-eau ou des échanges air-eau.

Il est connu à ce jour un type d'installation de chauffage et de production d'eau chaude sanitaire faisant appel à la fois à une telle énergie nouvelle, par exemple à l'énergie solaire, afin de chauffer un ballon de production d'eau chaude sanitaire et également afin de produire de l'eau chaude dans une réserve à l'intérieur d'un circuit de chauffage.

Ce type d'installation permet au circuit de chauffage de n'être chauffé par ailleurs qu'en appoint par une chaudière traditionnelle.

Ce type d'installation connu comporte ainsi une grande réserve d'eau de chauffage réchauffée via un échangeur par de l'énergie, par exemple solaire. Dans le volume défini par l'enceinte de cette réserve d'eau chaude, est plongé directement une unité de production d'eau chaude sanitaire. Cette unité d'eau chaude sanitaire ne permet en aucun cas un contact ou un mélange entre l'eau froide sanitaire arrivant dans cette unité, l'eau chaude sanitaire qui en sort, et l'eau chaude de chauffage circulant à partir de la réserve vers le circuit général de l'installation de chauffage.

Cette unité de production d'eau chaude sanitaire peut se présenter sous la forme d'un serpentin plongé dans la réserve d'eau chaude de chauffage, ou bien plus simplement sous la forme d'un ballon d'eau chaude sanitaire, lui-même plongé dans cette réserve. Dans ces deux cas, c'est l'eau chaude de la réserve qui chauffe directement, au contact, l'enveloppe de l'unité de production d'eau chaude sanitaire afin de produire une eau chaude sanitaire à température convenable.

Par ailleurs, cette réserve d'eau chaude dispose d'une sortie d'eau chaude circulant au travers d'une chaudière et alimentant un réseau de chauffage. Ce réseau de chauffage comporte des terminaux de chauffage et des canalisations en retour du circuit pour entrer dans la réserve d'eau chaude de chauffage.

Les terminaux de chauffage peuvent être composés de radiateurs en alliage (fonte, aluminium) ou bien encore être composés d'un réseau de tuyaux de chauffage par le sol. Ainsi les calories, fournies par l'énergie solaire et circulant grâce à l'eau, permettent de chauffer à la fois le ballon d'eau chaude sanitaire mais aussi l'ensemble du circuit de chauffage dans des conditions intermédiaire dite de demi-saison.

Lorsque la température d'eau chaude de la réserve n'est plus suffisante pour assurer un bon fonctionnement de la production d'eau chaude sanitaire, et surtout du chauffage domestique alors la chaudière sert d'énergie d'appoint.

Le but de ce type d'installation de chauffage est donc de faire fonctionner au maximum la production d'eau chaude via l'énergie nouvelle, ici solaire, avant d'apporter, si besoin est, l'énergie d'appoint provenant de la chaudière.

Il s'agit donc, à la fois, d'obtenir le meilleur rendement possible de la réserve d'eau à énergie solaire mais aussi du meilleur rendement possible de la chaudière couplée dans cette installation.

Il est à noter, que l'eau chaude de chauffage circule dans toute l'installation. Elle circule à la fois dans la réserve d'eau chaude, dans les terminaux de chauffage, dans le circuit général de chauffage et dans la chaudière. Elle y circule en circuit fermé.

Il est connu aussi un type d'installation de chauffage et de production d'eau chaude sanitaire faisant appel à la fois à une énergie nouvelle, par exemple à l'énergie solaire, afin de chauffer un ballon de production d'eau chaude comprenant un ballon d'eau chaude sanitaire étant externe à la réserve de fluide chaud. Un exemple de ce type d'installation est montré au document DE 103 49 942.

Le problème posé par ce type d'installation provient du fait que pour obtenir un bon rendement de la réserve d'eau chaude il faut puiser dans cette réserve le plus souvent possible, et dès que nécessaire, afin d'extraire un maximum de calories disponibles dans l'eau chaude, et afin de s'en servir dans le circuit général de chauffage.

Dans le cadre de ce type d'installation et dans le cadre de l'invention on s'intéressera plus particulièrement à une chaudière couplée qui est de type à condensation.

Il est connu que les chaudières à condensation peuvent travailler à de faibles températures. Ces faibles températures leur assurent par définition d'excellents rendements et donc de très bonnes performances.

De plus, dans le cas de terminaux de chauffage de type chauffage par le sol, la température de chauffage du circuit de chauffage est nettement plus faible que dans un circuit traditionnel avec radiateurs.

Une unité de production d'eau chaude, afin d'assurer un bon confort à l'utilisateur final, se doit de conserver un ballon à une température d'environ 55°C. Cette contrainte est indépendante de la montée en température de l'ordre de 70°C, nécessaire de façon hebdomadaire afin d'éviter toute risque de légionnellose.

Aussi, l'enveloppe définissant l'unité de production d'eau chaude sanitaire à l'intérieur de la réserve d'eau, et baignant dans celle-ci, n'est pas isolée thermiquement de cette réserve d'eau chaude sanitaire afin que celle-ci soit chauffée en continu par l'eau environnante de la réserve. L'échange thermique étant continu il est donc nécessaire, afin de conserver un ballon de production d'eau chaude sanitaire à une température constante de 55°C, de conserver également à cet endroit de la réserve une température d'eau chaude à 55°C.

Dans le cas de l'énergie solaire, les calories solaires circulent, via un fluide caloporteur, dans un échangeur situé en bas de la réserve d'eau chaude. L'unité de production d'eau chaude sanitaire se trouve en haut de la réserve d'eau chaude. Il est connu que, naturellement par un phénomène de thermo-siphon, l'eau chaude s'accumule en haut dans une première moitié haute de la réserve d'eau et l'eau froide dans la seconde moitié basse de la réserve.

La circulation de l'eau chaude dans l'installation de chauffage se fait donc à partir d'une sortie haute de la réserve. Le retour de l'eau de chauffage se fait dans une entrée basse de la réserve d'eau chaude.

Ainsi, un problème apparaît lors d'un besoin d'eau chaude dans le circuit de chauffage. L'apport énergétique provenant de la réserve d'eau chaude solaire ne pourra se faire au mieux qu'à hauteur du maintien à 55°C de la température du ballon de production d'eau chaude sanitaire plongé dans la réserve.

On ne peut donc se permettre d'enlever une quantité d'eau chaude de la réserve au-delà de laquelle la température de l'unité de production d'eau chaude sanitaire passerait en dessous des 55°C.

Un second problème existe du fait que le volume exploitable de l'eau chaude pouvant être contenue dans la réserve est forcément réduit par le volume d'une unité de production d'eau chaude sanitaire. Pour autant c'est la totalité de l'enceinte de la réserve d'eau qui devra posséder une isolation thermique afin de pas voir s'envoler la précieuse énergie solaire.

De surcroît un troisième problème est posé dans le cadre de l'utilisation de l'eau chaude sanitaire, lors d'un faible ensoleillement.

En effet, dans ce cas la chaudière doit se mettre en route afin de compenser l'insuffisance de température à l'intérieur de la réserve à défaut d'énergie solaire disponible ce, jusqu'à obtenir à nouveau une température autour de l'unité de production d'eau chaude donc en haut de la réserve égale à au moins 50° ou 60°C.

De plus, cette dernière contrainte empêche une chaudière à condensation de travailler à basses températures notamment pour un chauffage par le sol. On ne peut donc pas obtenir les meilleurs rendements possibles offerts par cette technologie si on la couple avec une chaudière à condensation.

En effet, il est de plus difficile, dans ce type d'installation connue, d'obtenir pour une chaudière de type à condensation un bon rendement car le fonctionnement de la chaudière s'effectue alors à une température d'eau plus élevée que nécessaire pour le type de réseau alimenté.

Les problèmes sont donc de deux ordres, premièrement une exploitation insuffisante de la réserve d'eau chaude solaire donc un rendement médiocre, deuxièmement un gaspillage de l'énergie traditionnelle pour assurer une température suffisante de production d'eau chaude sanitaire.

L'invention résout tous ces problèmes.

Pour cela on associe dans une installation de chauffage une réserve d'eau chaude alimentée par une énergie accessoire, de préférence solaire, avec une chaudière, de préférence de type pulsatoire à combustion et avec un ballon de production d'eau chaude sanitaire externe à la réserve d'eau.

L'ensemble est relié par un circuit général de circulation de l'eau chaude passant à la fois par la réserve d'eau chaude, la chaudière et un échangeur situé dans le ballon de production d'eau chaude sanitaire.

Ainsi pour une même dimension d'enceinte de la réserve on va pouvoir obtenir un volume total d'eau chaude pour le chauffage domestique et pour la production d'eau chaude sanitaire bien plus importante.

De plus, le circuit général de circulation d'eau chaude de l'invention comporte un ou plusieurs réseaux, un réseau correspondant au chauffage, avec des radiateurs et/ou un chauffage au sol, et au moins un réseau correspondant à la production d'eau chaude sanitaire muni de son ballon de production d'eau chaude sanitaire. Chacun de ces réseaux peut passer au travers de la chaudière et peut fonctionner avec ou sans l'apport correspondant de la réserve d'eau chaude.

On peut donc exploiter indépendamment l'apport d'énergie solaire de la réserve d'eau chaude soit pour le chauffage soit pour la production d'eau chaude sanitaire.

On peut donc puiser de l'énergie dans la réserve d'eau chaude bien en deçà des 55°C ce pour le chauffage ou même pour la production d'eau chaude sanitaire. Mais on peut également isoler la réserve d'eau chaude du circuit général de circulation de l'eau de chauffage lorsque la température d'eau chaude dans le circuit général est supérieure à celle de la réserve d'eau chaude.

Ainsi, aucune énergie d'appoint n'est fournie par la chaudière dans la réserve d'eau chaude. La réserve d'eau chaude peut donc accueillir la totalité de l'énergie solaire disponible et obtenir ainsi un bon rendement. Avec l'invention, selon un mode de réalisation préféré faisant appel à la technologie de combustion pulsatoire, plus la température d'eau chaude circulant dans le circuit général sera basse, meilleure sera la condensation obtenue dans la chaudière, et donc meilleure sera son rendement et par conséquent le rendement de l'installation de chauffage.

Il est utile de noter qu'une installation de ce type peut permettre durant une demi-saison, en l'occurrence l'automne ou la fin de l'hiver les jours d'ensoleillement corrects, de chauffer un local avec seulement la réserve d'eau chaude provenant de l'énergie solaire, ou de fournir l'énergie de la production d'eau sanitaire nécessaire.

Cela est d'autant plus vrai lorsqu'il s'agit d'un chauffage par le sol à basse température.

L'énergie d'appoint apportée par la chaudière est alors utile durant les périodes les plus froides, en l'occurrence l'hiver, ou lorsque bien entendu aucun apport d'énergie solaire ne peut se faire en l'absence de soleil. Il en va de même pour la production d'eau chaude sanitaire.

L'invention a donc pour objet une installation de chauffage combiné domestique et/ou de production d'eau chaude sanitaire comportant
- un réseau (2) de chauffage domestique,
- un réseau (3) de production d'eau chaude sanitaire,
- une réserve (4) de fluide chaud chauffé par un dispositif (5) de chauffage annexe,
- une chaudière (6),
- un ballon de production d'eau chaude sanitaire (7),
- un circuit général (8, 23-25) permettant la circulation du fluide à partir de la réserve de fluide chaud (4) au travers de la chaudière et tout le long du réseau de chauffage domestique et/ou du réseau de production d'eau chaude sanitaire, et
- un boîtier de commande thermique (9),
le ballon d'eau chaude sanitaire étant externe à la réserve de fluide chaud et étant chauffé par l'intermédiaire d'un échangeur par le fluide chaud circulant dans le circuit général,
caractérisée en ce que la chaudière (6) est une chaudière à condensation de type pulsatoire et
en ce qu'un dispositif (23) à fonction mitigeuse régule un retour de fluide chaud vers une entrée (12) de la réserve (4) et/ou vers le circuit général (8), entre une sortie (13) du réservoir (4) et une entrée (22) dans la chaudière (6).

L'invention sera mieux comprise à la lecture de la description qui suit à l'examen des figures qui l'accompagnent. Celles-ci ne sont présentées qu'à titre indicatif et nullement limitatif de l'invention. Les figures montrent :
- Figure 1 : une vue schématique générale de l'installation de chauffage conforme à l'invention.
- Figures 2 à 7 : des vues schématiques de l'installation de chauffage selon différents modes de fonctionnement de l'installation.

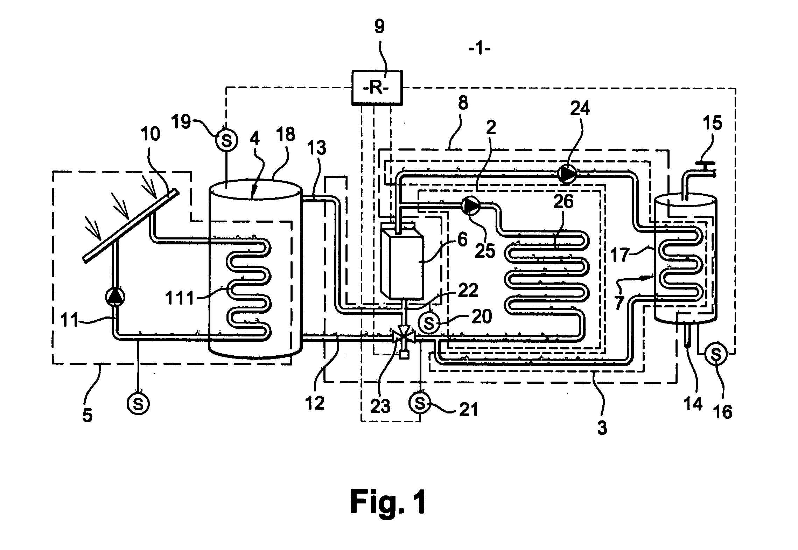

Sur la figure 1 est représentée schématiquement une installation 1 de chauffage de l'invention permettant la production de chauffage domestique ainsi que la production d'eau chaude sanitaire.

L'installation 1 comporte un réseau 2 de canalisations dans lequel circule un fluide, notamment de l'eau chaude, correspondant au chauffage domestique. Ce réseau 2 de chauffage domestique comprend les terminaux de chauffage 26 à savoir des radiateurs ou un réseau de chauffage par le sol.

L'installation comprend également un réseau 3 de production d'eau chaude sanitaire. Ce réseau 3 est composé également de canalisations de circulation d'eau chaude passant notamment dans une unité de production d'eau chaude sanitaire. L'installation comporte également une réserve 4 de fluide chaud en l'occurrence de l'eau chaude (non sanitaire). Cette réserve 4 d'eau chaude est chauffée par un dispositif 5 de chauffage annexe, ici solaire. L'installation comporte également une chaudière 6.

Selon l'invention, la chaudière 6 est une chaudière à condensation de type à combustion pulsatoire.

L'installation 1 comporte également un ballon 7 de production d'eau chaude sanitaire. Ce ballon 7 contient et réchauffe l'eau froide sanitaire. Le ballon 7 est, de préférence, thermiquement isolé.

L'installation 1 comporte de plus un circuit général 8 composé également de canalisations permettant la circulation de l'eau chaude à partir de la réserve 4 ce, au travers de la chaudière 6, le long du réseau de chauffage domestique 2, ou du réseau 3 de production d'eau chaude sanitaire. Ce circuit général 8 comporte une vanne trois voies mélangeuse 23 permettant d'orienter le flux d'eau chaude dans les différentes canalisations.

Sur les deux réseaux 2 et 3 de chauffage domestique et de production d'eau chaude sanitaire sont présents également des pompes de circulation respectivement 25 et 24.

Enfin, l'installation 1 de chauffage de l'invention comporte un boîtier de commande 9. Dans le cadre de l'utilisation d'une chaudière à combustion pulsatoire 6, ce boîtier de commande 9 fait partie intégrante du corps de la chaudière.

Ce boîtier de commande 9 permet d'assurer une régulation thermique de l'ensemble de l'installation grâce au contrôle de la vanne trois voies mélangeuse 23, des pompes de circulation 24 et 25 et grâce à différentes sondes thermiques postées à différents endroits du circuit général 8 et plus généralement de l'installation 1.

Ces sondes de température sont notamment placées aux endroits où il est nécessaire de contrôler l'évolution de la température de l'eau circulant dans l'installation. Elles sont placées notamment dans la réserve d'eau chaude, à la sortie haute 13 de la réserve 4 d'eau chaude connectée au circuit général, et également sur le retour 12 d'eau chaude du circuit général correspondant aux réseaux 2 et 3 de chauffage et de production d'eau chaude sanitaire.

Une première sonde 19 connectée permet ainsi de connaître la température de l'eau chaude stockée dans la réserve. Eventuellement elle est placée en sortie 13 et permet de connaître précisément la température de sortie de la réserve 4. Une deuxième sonde 20 permet de connaître, avant l'entrée 22 dans la chaudière 6, la température circulant dans le circuit général. Une troisième sonde 21 permet de connaître la température de retour d'eau chaude dans le circuit général correspondant à la fois à un retour d'eau chaude de chauffage et à un retour d'eau chaude sanitaire.

Le dispositif 5 de chauffage annexe est de préférence solaire. Il pourrait toutefois être formé par une combinaison de plusieurs sources de chaleur annexes. Typiquement il pourrait comporter une source de chaleur solaire et une pompe à chaleur. Le dispositif 5 servant à chauffer la réserve d'eau chaude comporte ici des panneaux solaires 10, ces panneaux solaires 10 sont composés de capteurs solaires. Ces panneaux 10 sont placés en extérieur et éventuellement intégrés à la toiture d'une habitation. Les panneaux 10 sont reliés par un circuit 11 dans lequel circule un fluide caloporteur passant via un échangeur 111, en l'occurrence un serpentin, dans la réserve d'eau chaude 4.

L'échangeur 111 est placé de telle façon qu'il se situe préférentiellement dans la partie de la seconde moitié basse de la réserve d'eau chaude.

L'entrée du fluide chaud provenant des panneaux 10 se situe donc à mi-hauteur de la réserve 4 d'eau chaude et sa sortie dans la partie basse de la réserve 4 d'eau chaude.

Le retour d'eau chaude du circuit général se fait également dans cette même partie inférieure de la réserve. C'est dans cette partie inférieure de la réserve que la demande en énergie solaire, et donc le potentiel de récupération, sera la plus importante.

La seconde moitié haute de la réserve 4 comporte l'essentiel de la réserve d'eau chaude. En haut de la réserve 4 se trouve la sortie d'eau chaude 13 correspondant à l'entrée d'eau chaude dans le circuit général 8.

Toute l'eau chaude sortant par cette sortie 13 de la réserve 4 passe au travers de la chaudière 6 avant de circuler dans le réseau 2 de chauffage ou dans le réseau 3 de production d'eau chaude. La production d'eau chaude est donc assurée par le ballon 7 muni d'une entrée d'eau froide 14 et, à une autre extrémité haute du ballon 7, d'une sortie d'eau chaude sanitaire 15.

Une sonde 16 reliée au boîtier de commande 9 correspondant à la régulation de l'installation permet de déclencher la mise en route du réseau de production d'eau chaude lorsque la température de l'eau chaude est insuffisante.

Les enceintes 17 et 18 respectivement du ballon 7 d'eau chaude sanitaire et de la réserve 4 d'eau chaude assurent une isolation thermique vis-à-vis de l'extérieur. Les volumes respectifs contenus respectivement dans ces enceintes 17 et 18 sont de l'ordre de 200 litres pour le ballon d'eau chaude sanitaire et de 300 à 600 litres pour la réserve d'eau chaude. La réserve 4 forme donc un gros volume dont la valeur peut être le double ou le triple de celle du ballon 7. Dans un exemple, la réserve 4 est formée de plusieurs enceintes branchées en parallèle sur la source 5 de chaleur annexe. Ces enceintes multiples peuvent chacune être petites et facilement transportables à l'intérieur d'une habitation.

Ainsi le chauffage de l'eau sanitaire via l'échangeur, grâce à l'énergie solaire ou à l'énergie de la chaudière, ne se fera que pour la quantité présente dans ce ballon 7 à savoir environ 200 litres.

Une sonde thermique 19 située dans la réserve d'eau chaude reliée à la commande de régulation thermique permet de connaître instantanément la température disponible de l'eau chaude dans la réserve 4.

Une sonde 20 est également placée sur le circuit général en entrée 22 de la chaudière 6 afin de déterminer la température de l'eau chaude arrivant dans la chaudière. La sonde 21 permet de déterminer la température de l'eau de retour sur le circuit général 8.

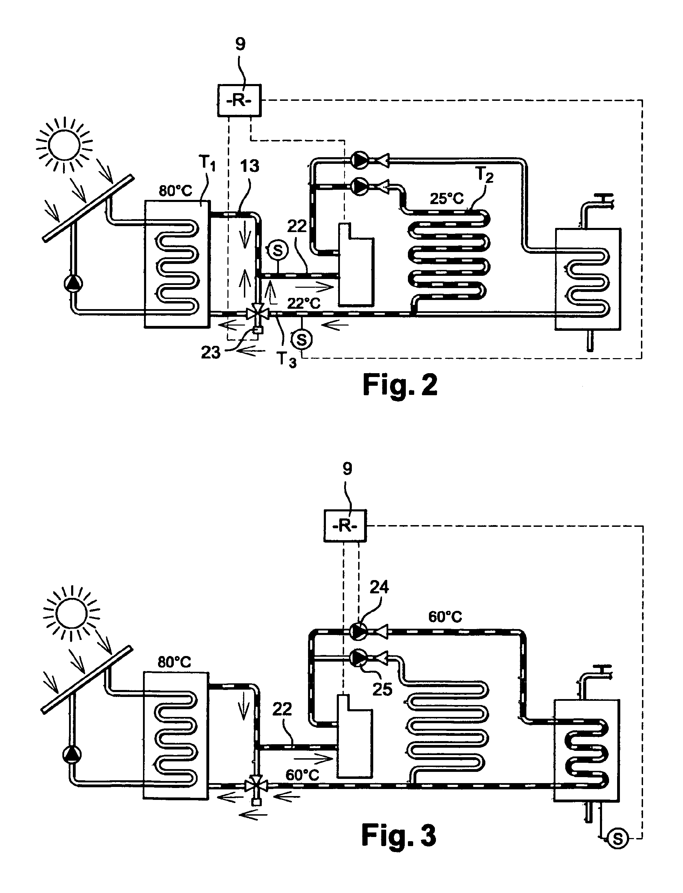

La numérotation utilisée pour les éléments de la figure 1 communs aux éléments des figures 2 à 7 est reprise pour ces mêmes éléments.

La chaudière 6 utilisée dans l'invention utilise la technique de la condensation.

Cette technique de condensation permet de récupérer, grâce à un échangeur très important, voire surdimensionné, la chaleur latente contenue dans la vapeur d'eau produite par la combustion des gaz.

De façon plus précise la chaudière 6 selon l'invention est une chaudière à condensation et à combustion pulsatoire.

Cette technologie utilise un échangeur constitué d'un faisceau de tube en spirale placé sous la chambre de combustion, les deux étant immergés dans l'eau de chauffage afin d'obtenir un échange thermique maximum.

Cette chaudière à combustion pulsatoire à mélange et à gaz ne comporte pas de brûleur. Le mélange est directement introduit dans la chambre de combustion et déclenche ainsi une micro combustion.

Une alternance de pressions/dépressions engendrées par les combustions successives dans la chambre crée un écoulement turbulent des gaz de combustion dans les tubes de l'échangeur. Les tubes en spirale de l'échangeur transmettent ainsi au fluide un maximum de l'énergie de ces gaz de combustion.

La vapeur d'eau contenue dans les gaz de combustion se condense ainsi naturellement dans les spirales et augmente encore le transfert de calories de la chaudière. Ce transfert est tel que les gaz de combustion en sortie de l'échangeur peuvent avoir une température de l'ordre de 25°C. On obtient ainsi un rendement pour ce type de chaudière à condensation et à combustion pulsatoire de l'ordre de 106 à 110%.

L'un des intérêts à utiliser ce type de chaudière dans l'installation de chauffage proposée par l'invention est de pouvoir donc travailler à basse température ce qui peut être intéressant notamment pour des chauffages de type chauffage par le sol.

L'autre intérêt est que ce type de chaudière ne présente quasiment pas de pertes thermiques à l'arrêt, sachant qu'elle est irriguée par le fluide du circuit général.

Sur la figure 2 est représenté le schéma de fonctionnement de l'installation de chauffage de l'invention en présence de soleil et ce pour la partie correspondant au réseau 2 de chauffage. Plus précisément cette figure 2 représente un mode de fonctionnement lors d'une demi-saison (automne ou fin de l'hiver) avec une température de circulation d'eau chaude dans le circuit de chauffage intermédiaire.

Grâce à l'énergie solaire la température présente dans la réserve 4 d'eau chaude est maximale (de l'ordre environ de 80°C). La sortie d'eau chaude de la réserve 4 se fait par la sortie haute 13 et entre dans la chaudière par une entrée 22. L'eau chaude passe au travers de la chaudière qui ne se déclenche pas car la température d'eau exigée par le réseau de chauffage est inférieure à celle de l'eau en provenance de la réserve 4 d'eau chaude.

Dans le réseau 2 de chauffage, la température de retour de l'eau chaude s'effectue à une température T3. Cette température T3 est connue grâce à la sonde 21 et est analysée par le boîtier de commande 9. Une vanne trois voies 23 mélangeuse, ou tout dispositif à fonction mitigeuse ou directionnelle équivalent, commandée également par le boîtier 9 de commande régule alors le retour d'eau chaude de l'installation chauffage en orientant le flux directement vers l'entrée basse 12 de la réserve 4 d'eau chaude, ou avec un retour partiel direct, dans le circuit général situé entre la sortie 13 de réserve d'eau chaude et l'entrée 22 dans la chaudière 6.

La vanne trois voies mélangeuse 23 permet de laisser rentrer tout ou partie du retour d'eau chaude de l'installation de chauffage dans la réserve d'eau chaude. Elle permet également de mélanger une partie du retour d'eau chaude avec la sortie d'eau chaude de la réserve 4 d'eau afin d'effectuer un mélange juste avant l'entrée 22 dans la chaudière puis dans l'entrée du réseau 2 de chauffage. Dans ce cas le chauffage est intégralement assuré par la fourniture d'énergie solaire de la réserve 4 d'eau chaude. La chaudière 6 à combustion pulsatoire est à l'arrêt.

De la sorte la capacité de stockage d'énergie solaire est constituée de l'ensemble de la réserve 4 d'eau chaude mais aussi de l'ensemble du circuit général d'eau chaude constitué par les terminaux de chauffage 26.

La Figure 3 représente également un mode de fonctionnement de l'installation de chauffage de l'invention en été ainsi qu'en demi-saison mais pour la production d'eau chaude sanitaire.

Durant ces périodes, avec une durée minimum d'ensoleillement journalière, la production d'eau chaude sanitaire peut être assurée exclusivement par l'énergie solaire. La pulsatoire est donc à l'arrêt.

Dans ce cas, l'eau chaude de la réserve passe par la chaudière par l'entrée 22 et est puisée, via la vanne de circulation 24, au sein du réseau 3 de production d'eau chaude sanitaire, le retour d'eau chaude du réseau 3 se fait alors directement dans l'entrée 12 basse de la réserve 4 d'eau chaude afin d'obtenir une capacité maximum de stockage d'énergie solaire à la fois dans la réserve 4 d'eau chaude mais aussi dans le ballon 7 d'eau chaude sanitaire. Lorsque la température à l'intérieur du ballon 7 d'eau chaude sanitaire établie par la sonde 16 est atteinte le boîtier de commande 9 interrompt la pompe de circulation 24.

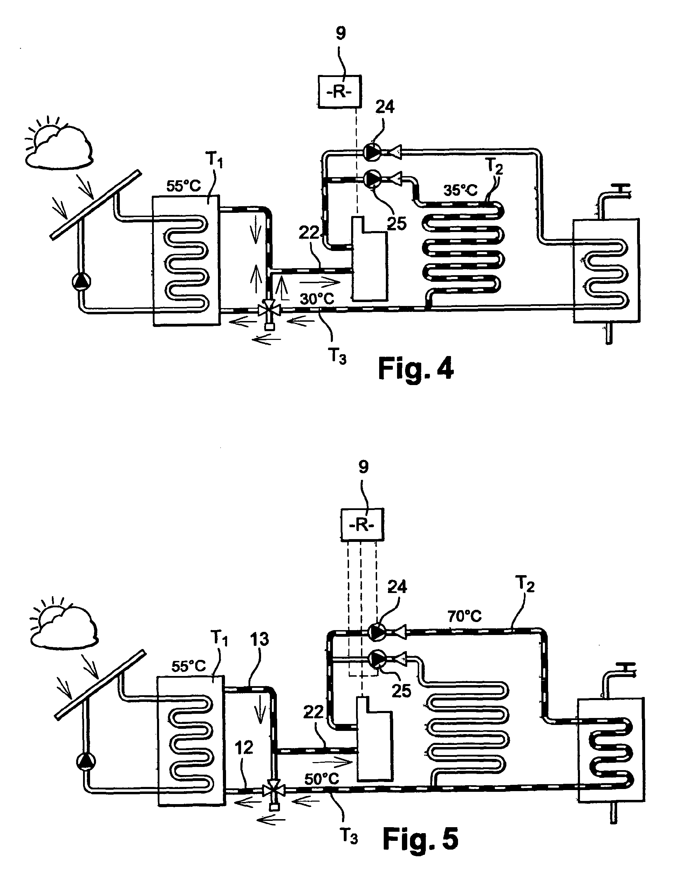

Sur la figure 4 est représenté un mode de fonctionnement de l'installation de chauffage de l'invention lors d'un temps nuageux en demi-saison.

Dans ce cas la capacité de puisage de l'énergie solaire n'est pas maximale mais la température d'eau de chauffage dans l'installation est un peu plus importante afin de ne pas refroidir le logement. La température T2 nécessaire dans le réseau 2 de chauffage est ainsi supérieure à celle nécessaire par temps ensoleillé par définition. La température T1 obtenue dans la réserve d'eau chaude sera, quant à elle, inférieure à celle présente lors d'un ensoleillement complet car d'une part l'énergie solaire disponible est inférieure et d'autre part l'énergie nécessaire pour chauffer le réseau de chauffage domestique est supérieure.

L'équilibre se fait sans pour autant que la chaudière 6 ne se mette en route. Il faudrait pour cette mise en oeuvre que la température T1 obtenue dans la réserve 4 d'eau chaude devienne inférieure à la température T2 souhaitée dans le réseau de chauffage.

En pratique, un intervalle de température est néanmoins nécessaire entre T1 et T2 car, malgré qu'une partie du retour d'eau chaude du réseau de chauffage se fasse directement dans la chaudière, la déperdition calorifique naturelle au sein même des radiateurs en demi-saison peut être supérieure à la vitesse d'acquisition d'eau chaude dans la réserve 4.

Ainsi, en pratique, dans le cas d'une chaudière à combustion pulsatoire et avec un chauffage par le sol la température T2 nécessaire en demi-saison dans le réseau 2 de chauffage est d'environ 35°C. La température de la réserve d'eau T1 est alors d'environ 55°C. Pour autant, avec cet écart de température ΔT de T1 - T2 de 20°C, l'invention permet encore d'exploiter l'énergie calorifique de la réserve 4 d'eau chaude au travers de la chaudière sans mise en route de cette dernière.

En pratique le retour d'eau chaude T3 s'effectue à une température d'environ 30°C et la commande de régulation 9, selon les températures relevées sur les sondes 19, 20 et 21 oriente une partie de l'eau chaude directement dans la section entre la sortie 13 et l'entrée 22 de la chaudière pour créer un mélange avec l'eau sortant à 55°C de la réserve 4 d'eau chaude. Une autre partie est envoyée directement dans le bas de la réserve d'eau chaude pour y être réchauffée.

La figure 5 représente un mode de fonctionnement toujours par temps nuageux et en demi-saison mais pour la production d'eau chaude sanitaire.

Dans ce cas, vis-à-vis du réseau de chauffage vu dans la figure 4, le boîtier de commande de régulation 9 peut être programmé de telle façon que, dans le cas d'une demande de production de chauffage ou de production d'eau chaude sanitaire, ce soit cette dernière qui soit prioritaire.

Dans ce cas, la température T1 stockée dans la réserve toujours située aux environs de 55°C en pratique s'avère inférieure à la température T2 de l'ordre de 70°C nécessaire pour chauffer le ballon de production d'eau chaude sanitaire. Dans ce cas, la commande de régulation déterminant l'écart de température entre T2 et T1 commande la mise en route de la chaudière, uniquement pour apporter ou faire l'appoint sur cet écart de température (de 15°C). La température T3 de retour du réseau de production d'eau chaude sanitaire est alors de l'ordre de 50°C du fait d'une déperdition ou plus simplement d'une demande d'eau chaude sanitaire. La température T3 est alors inférieure à la température T1 présente au sein même de la réserve 4 d'eau chaude. Toute l'eau retourne à la réserve 4.

On peut donc continuer à puiser un maximum d'énergie calorifique solaire à l'intérieur de la réserve d'eau chaude cela pour une température T1 inférieure à environ 55°C. En pratique une température T1 de l'ordre de 55°C est la température au-dessous de laquelle on ne pourrait descendre dans la réserve dans le cas d'un ballon de production d'eau chaude sanitaire intégré à cette réserve.

La commande de régulation 9 via la vanne trois voies est chargée de conserver une température T3 de retour d'eau chaude sanitaire et d'entrée 12 dans la réserve toujours inférieure à T1. Dans la pratique on peut encore abaisser cette température de sortie 13 de réserve d'eau chaude, au profit de la production d'eau chaude, jusqu'à l'équilibre consistant à obtenir un retour T3 d'eau chaude supérieur à la température présente dans la réserve. Dans ce cas, la vanne trois voies bloque l'entrée du retour d'eau chaude dans l'entrée 12 de la réserve 4 d'eau chaude et dirige le flux en totalité dans l'entrée 22 de la chaudière.

Cette action est commandée par la nécessité de ne pas utiliser l'énergie d'appoint de la pulsatoire comme apport énergie au sein même de la réserve d'eau chaude solaire.

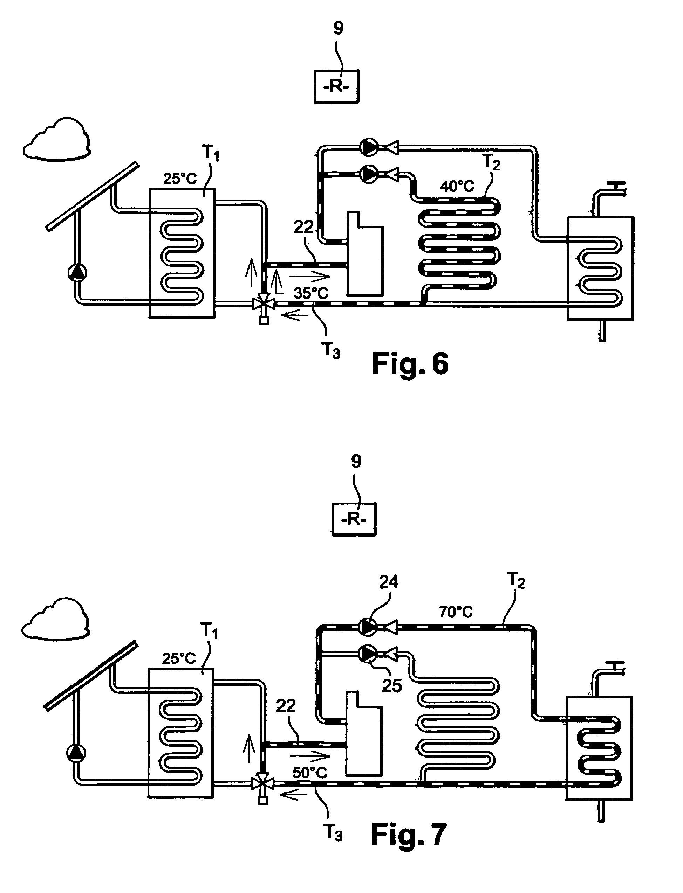

Sur la figure 6 est représenté un mode de fonctionnement d'installation de chauffage en absence de soleil, c'est-à-dire un temps totalement couvert, ou de nuit, et dans le cas de production de chauffage.

Dans ce cas, la totalité de l'énergie de la réserve a été puisée, la chaudière se met en route suivant le réseau 2 de chauffage, la vanne trois voies oriente le flux de retour d'eau chaude en totalité directement à l'entrée 22 de la chaudière 6 sans passer par la réserve 4 d'eau chaude.

Ainsi la température T1 présente au sein de la réserve 4 peut également être descendue d'environ 25°C. L'énergie d'appoint de la chaudière n'est pas exigée quant au réchauffement à 55°C de la réserve d'eau.

De plus, toujours dans le cadre d'un chauffage par le sol, la température du réseau de chauffage peut être suffisante en demi-saison, voire en hiver, aux alentours d'une température T2 dans le réseau 2 de chauffage de 40°C : la pulsatoire donne alors son meilleur rendement du fait d'un fonctionnement à basse température.

La Figure 7 représente un mode de fonctionnement en absence de soleil et ou de nuit du réseau 3 de production d'eau chaude sanitaire.

Là encore la totalité d'énergie fournie par le soleil au sein de la réserve d'eau est puisée et la pulsatoire, lors de demande d'eau chaude, fournit l'énergie d'appoint. Le retour d'eau chaude sanitaire se fait directement via la vanne trois voies dans l'entrée 22 de la chaudière sans également passer par la réserve 4 d'eau chaude.

Selon l'invention, le boîtier de commande thermique 9 comporte des moyens pour que, lorsque la chaudière se met en route en appoint d'énergie pour atteindre une température d'eau souhaitée dans un réseau alors, la circulation de l'eau via la réserve soit interrompue si la température de l'eau de retour circulant dans le circuit général devient supérieure à celle présente dans la réserve. De préférence, le boîtier de commande comporte des moyens pour réguler le débit du fluide du circuit général dans le but d'optimiser sa température de retour. Celle-ci doit alors être la plus basse possible. Et tant que cette température basse est inférieure à celle de la réserve 4, la chaleur de la réserve 4 est pompée par utilisation de l'eau de cette réserve 4. De préférence également, une sonde thermique 19 est placée en haut de la réserve et une sonde thermique 21 est placée sur la vanne 23 de retour du circuit général pour donner des renseignements les plus propices à un meilleur rendement. En effet, en prenant les informations à ces endroits là, il est certain que toute l'énergie thermique stockée dans la réserve sera exploitée. Ceci pourrait ne pas être le cas si la sonde de sortie était placée dans la chaudière 6.

Il est à noter qu'afin d'améliorer encore la régulation thermique de l'ensemble de l'installation de chauffage, une sonde peut être placée sur le plateau de capteur solaire afin de déterminer la température de départ du fluide caloporteur et donc de connaître indirectement l'intensité d'ensoleillement. Une sonde peut être également placée à l'extérieur de l'habitation bénéficiant de l'installation afin de connaître la température extérieure. Une sonde d'ambiance peut être également placée dans une pièce neutre représentant un poids moyen en température de l'habitation. On pourra grâce à la première sonde solaire déterminer l'énergie solaire disponible pour le réchauffement de la réserve 4 d'eau chaude, grâce à la seconde sonde, on pourra déterminer plus facilement la température d'eau chaude de chauffage exigée en entrée pour compenser le refroidissement extérieur, et enfin grâce à la troisième sonde, déterminer plus rapidement la mise en route de la chaudière afin de réchauffer les pièces des habitations.

## Revendications

1. Installation (1) de chauffage domestique et/ou de production d'eau chaude sanitaire comportant
- un réseau (2) de chauffage domestique,
- un réseau (3) de production d'eau chaude sanitaire,
- une réserve (4) de fluide chaud chauffé par un dispositif (5) de chauffage annexe,
- une chaudière (6),
- un ballon de production d'eau chaude sanitaire (7),
- un circuit général (8, 23-25) permettant la circulation du fluide à partir de la réserve de fluide chaud (4) au travers de la chaudière et tout le long du réseau de chauffage domestique et/ou du réseau de production d'eau chaude sanitaire, et
- un boîtier de commande thermique (9),
le ballon d'eau chaude sanitaire étant externe à la réserve de fluide chaud et étant chauffé par l'intermédiaire d'un échangeur par le fluide chaud circulant dans le circuit général,
**caractérisée en ce que** la chaudière (6) est une chaudière à condensation de type pulsatoire et
**en ce qu'**un dispositif (23) à fonction mitigeuse régule un retour de fluide chaud vers une entrée (12) de la réserve (4) et/ou vers le circuit général (8), entre une sortie (13) du réservoir (4) et une entrée (22) dans la chaudière (6).

2. Installation selon la revendication 1, **caractérisée en ce que** le dispositif (5) de chauffage annexe est à énergie solaire et/ou de biomasse et/ou comporte une pompe à chaleur et/ou une pile à combustible.

3. Installation selon l'une des revendications 1 à 2, **caractérisée en ce que** le réseau de chauffage domestique (2) comporte un chauffage par le sol.

4. Installation selon l'une des revendications 1 à 3, **caractérisée en ce que** la réserve (4) d'eau chaude comporte plusieurs enceintes.

5. Installation selon l'une des revendications 1 à 4, **caractérisée en ce que** la réserve (4) d'eau chaude contient un volume d'eau de l'ordre du double ou du triple du volume du ballon (7).

6. Installation selon l'une des revendications 1 à 5, **caractérisée en ce que** le boîtier de commande thermique (9) comporte des moyens pour autoriser le fonctionnement du réseau de chauffage et/ou du réseau de production d'eau chaude sanitaire en provoquant la circulation d'eau au travers de la réserve (4) d'eau chaude si la température d'eau nécessaire et/ou présente dans le réseau est inférieure ou égale à celle de l'eau présente dans la réserve (4).

7. Installation selon l'une des revendications 1 à 6, **caractérisée en ce que** le boîtier de commande thermique (9) comporte des moyens pour bloquer le passage de l'eau dans la réserve (4) d'eau chaude si la température d'eau nécessaire et/ou présente dans un réseau est supérieure à celle de l'eau présente dans la réserve (4).

8. Installation selon l'une des revendications 1 à 7, **caractérisée en ce que** le boîtier de commande thermique (9) comporte des moyens pour déclencher la mise en route de la chaudière (6) si la température de l'eau présente dans au moins un des réseaux et la température présente dans la réserve sont inférieures à celle souhaitée dans un des réseaux.

9. Installation selon l'une des revendications 1 à 8, **caractérisée en ce que** le boîtier de commande thermique (9) comporte des moyens pour que, lorsque la chaudière se met en route en appoint d'énergie pour atteindre une température d'eau souhaitée dans un réseau alors, la circulation de l'eau via la réserve (4) soit interrompue si la température de l'eau de retour circulant dans le circuit général devient supérieure à celle présente dans la réserve.

10. Installation selon l'une des revendications 1 à 9, **caractérisée en ce que** le boîtier de commande comporte des moyens pour réguler le débit du fluide du circuit général dans le but d'optimiser sa température de retour.

11. Installation selon l'une des revendications 1 à 10, **caractérisée en ce qu'**elle comporte une sonde thermique placée en haut de la réserve (4) et une sonde thermique placée sur une vanne de retour du circuit général pour donner des renseignements les plus propices à un meilleur rendement.

## Claims

1. A domestic heating and/or domestic hot water production installation (1) comprising
- a domestic heating network (2),
- a domestic hot water production network (3),
- a storage reservoir (4) for hot liquid heated by an attached heating device (5),
- a boiler (6),
- a domestic hot water production tank (7),
- a general circuit (8, 23-25) enabling the liquid to circulate from the hot liquid storage reservoir (4) through the boiler and along the domestic heating network and/or the domestic hot water production network, and
- a thermal control box (9),
the domestic hot water tank being outside of the hot liquid storage reservoir and being heated via a heat exchanger by the hot liquid circulating within the general circuit,
**characterised in that** the boiler (6) is a pulse-type condensing boiler and
**in that** a mixing valve device (23) controls hot liquid return towards an inlet (12) of storage reservoir (4) and/or towards the general circuit (8), between an outlet (13) of storage reservoir (4) and an inlet (22) in boiler (6).

2. An installation according to claim 1, **characterised in that** the attached heating device (5) is powered by solar energy and/or biomass and/or comprises a heat pump and/or a fuel cell.

3. An installation according to one of claims 1 to 2, **characterised in that** the domestic heating network (2) comprises underfloor heating.

4. An installation according to one of claims 1 to 3, **characterised in that** the hot water storage reservoir (4) comprises several enclosures.

5. An installation according to one of claims 1 to 4, **characterised in that** the hot water storage reservoir (4) contains a volume of water approximately double or triple the volume of tank (7).

6. An installation according to one of claims 1 to 5, **characterised in that** the thermal control box (9) comprises the means to authorise the heating network and/or the domestic hot water production network to operate, by causing water to circulate through the hot water storage reservoir (4) if the temperature of the water required and/or present in the network is lower than or equal to the temperature of the water present in the storage reservoir (4).

7. An installation according to one of claims 1 to 6, **characterised in that** the thermal control box (9) comprises the means to block the passage of water into the hot water storage reservoir (4) if the temperature of water required and/or present in a network is higher than that of the water present in the storage reservoir (4).

8. An installation according to one of claims 1 to 7, **characterised in that** the thermal control box (9) comprises the means to activate the boiler (6) if the temperature of the water present in at least one of the networks and the temperature present in the storage reservoir are lower than the temperature desired in one of the networks.

9. An installation according to one of claims 1 to 8, **characterised in that** the thermal control box (9) comprises the means, when the boiler is activated to supply additional energy in order to reach a desired water temperature in a network, to interrupt the circulation of water via the storage reservoir (4) if the temperature of the return water circulating in the general circuit raises above the temperature present in the storage reservoir.

10. An installation according to one of claims 1 to 9, **characterised in that** the control box comprises the means to control the flow of liquid from the general circuit with the purpose of optimising its return temperature.

11. An installation according to one of claims 1 to 10, **characterised in that** it comprises a temperature sensor placed at the top of the storage reservoir (4) and a temperature sensor placed on a return valve of the general circuit in order to provide information concerning performance improvements.

## Patentansprüche

1. Anlage (1) zum Heizen eines Hauses und/ oder zur Warmwasserbereitung mit
- einem Netz (2) für die Hausheizung,
- einem Netz (3) zur Warmwasserbereitung
- einem Vorratsbehälter (4) für heiße Fluide, die durch eine zugehörige Heizanlage (5) erhitzt werden,
- einem Heizkessel (6),
- einem Boiler zur Warmwasserbereitung (7),
- einem allgemeinen Kreislauf (8, 23-25), der den Umlauf der Fluide vom Vorratsbehälter (4) für heiße Fluide durch den Heizkessel hindurch und durch das Netz für die Hausheizung und/ oder das Netz zur Warmwasserbereitung ermöglicht, und
- einem Temperatursteuergerät (9),
wobei sich der Boiler zur Warmwasserbereitung außerhalb des Vorratsbehälters für heiße Fluide befindet, und anhand eines Wärmetauschers durch die heißen Fluide erhitzt wird, die durch den allgemeinen Kreislauf fließen,
**dadurch gekennzeichnet, dass** der Heizkessel (6) ein Mischtyp eines Kondensierungskessels ist,
und dadurch, dass eine Vorrichtung (23) mit Mischfunktion einen Rückfluss der heißen Fluide zu einem Einlass (12) des Vorratsbehälters (4) und/ oder zum allgemeinen Kreislauf (8), zwischen einem Auslass (13) des Vorratsbehälters (4) und einem Einlass (22) in den Heizkessel (6) regelt.

2. Anlage nach Anspruch 1, **dadurch gekennzeichnet, dass** die zugehörige Heizanlage (5) mit Sonnenenergie und/ oder Biomasse betrieben wird und/ oder eine Wärmepumpe und/ oder eine Brennstoffzelle enthält.

3. Anlage nach einem der Ansprüche 1 bis 2, **dadurch gekennzeichnet, dass** das Netz (2) für die Hausheizung eine Fußbodenheizung enthält.

4. Anlage nach einem der Ansprüche 1 bis 3, **dadurch gekennzeichnet, dass** der Vorratsbehälter (4) für Warmwasser mehrere Umwandungen enthält.

5. Anlage nach einem der Ansprüche 1 bis 4, **dadurch gekennzeichnet, dass** der Vorratsbehälter (4) für Warmwasser ein Wasservolumen in der Größenordnung vom doppelten oder dreifachen Volumen des Boilers (7) enthält.

6. Anlage nach einem der Ansprüche 1 bis 5, **dadurch gekennzeichnet, dass** das Temperatursteuergerät (9) Mittel zur Betriebsfreigabe für das Heizungsnetz und/ oder für das Netz zur Warmwasserbereitung durch das Auslösen des Wasserumlaufs durch den Vorratsbehälter (4) für Warmwasser enthält, wenn die benötigte und/ oder im Netz vorhandene Wassertemperatur geringer oder gleich jener des im Vorratsbehälter (4) enthaltenen Wassers ist.

7. Anlage nach einem der Ansprüche 1 bis 6, **dadurch gekennzeichnet, dass** das Temperatursteuergerät (9) Mittel zum Blockieren des Durchflusses des Wassers durch den Vorratsbehälter (4) für Warmwasser enthält, wenn die benötigte und/ oder im Netz vorhandene Wassertemperatur höher oder gleich jener des im Vorratsbehälter (4) enthaltenen Wassers ist.

8. Anlage nach einem der Ansprüche 1 bis 7, **dadurch gekennzeichnet, dass** das Temperatursteuergerät (9) Mittel zur Einschaltauslösung des Heizkessels (6) enthält, wenn die Wassertemperatur in zumindest einem der Netze, sowie die im Vorratsbehälter vorherrschende Temperatur unter jener liegen, die für eines der Netze gewünscht wird.

9. Anlage nach einem der Ansprüche 1 bis 8, **dadurch gekennzeichnet, dass** das Temperatursteuergerät (9) Mittel dafür enthält, dass, wenn der Heizkessel als Energieunterstützung in Betrieb geht, um eine gewünschte Wassertemperatur in einem Netz zu erreichen, der Wasserfluss durch den Vorratsbehälter (4) unterbrochen wird, wenn die Temperatur des Rückflusswassers im allgemeinen Kreislauf über jener liegt, die im Vorratsbehälter vorherrscht.

10. Anlage nach einem der Ansprüche 1 bis 9, **dadurch gekennzeichnet, dass** das Steuergerät Mittel zur Regelung der Flussmenge im allgemeinen Kreislauf enthält, mit dem Ziel, die Rückflusstemperatur zu optimieren.

11. Anlage nach einem der Ansprüche 1 bis 10, **dadurch gekennzeichnet, dass** sie eine Temperatursonde enthält, die oben am Vorratsbehälter (4) angebracht ist, und eine Temperatursonde, die an einem Rückflussventil des allgemeinen Kreislaufs angebracht ist, um möglichst günstige Informationen für eine verbesserte Leistung zu liefern.
